# EUROPEAN PATENT APPLICATION

(11) **EP 3 736 703 A1**
(43) Date of publication of application: **11.11.2020**
(21) Application number: 20167960.2
(22) Date of filing: 03.04.2020
(51) Int. Cl.: G06F 13/42, G06F 9/445, G05B 19/414, G06F 8/654

(54) **COMMUNICATION SYSTEM AND DATA REWRITING METHOD**

(30) Priority: 08.05.2019 JP 2019088294
(71) Applicant: YAZAKI CORPORATION, Minato-ku, Tokyo 108-8333 (JP)
(72) Inventor: YAMAMOTO, Shohei, Makinohara-shi, Shizuoka 421-0407 (JP)
(74) Representative: Grünecker Patent- und Rechtsanwälte PartG mbB

(57) **Abstract**

Communication system and data rewriting method which can reduce the cost of an ECU are provided. A communication system 1 includes a master ECU 2 and a slave ECU 3 configured to receive a communication frame from the master ECU 2, wherein the slave ECU 3 includes a region 35a for an operating program that controls a load 4 connected to this slave ECU, and a region 35c for a set value. The slave ECU 3 is configured to rewrite the set value based on a communication frame 10A transmitted from the master ECU 2.

## Description

### BACKGROUND OF THE INVENTION

### Field of the Invention

The present invention relates to a communication system including an electronic control unit (ECU) to be mounted on a vehicle, and to a method for rewriting data in the ECU.

### Description of the Related Art

Recently, performance of an automobile is advancing and a large number of ECUs are mounted on one vehicle. In addition to controlling an engine and a transmission, the ECUs control a power window, a lamp, a door mirror and such. Since respective ECUs function in connection with each other, the respective ECUs are connected via a dedicated signal wire provided between the ECUs and/or a bus common to the respective ECUs to input and output signal via the signal wire and/or a communication wire of the bus (for example, refer to Patent Document 1).

### Citation List

### Patent Document

Patent Document 1: JP 2004-242001 A

### SUMMARY OF THE INVENTION

### Technical Problem

The ECU includes a microcomputer having a CPU, memory and such as a control circuit, and a program executed to operate the CPU is stored in the memory of this microcomputer. This program may be rewritten for improvement and such after shipment of products.

Conventionally, it is necessary to provide in the memory a region for a program that is operating and a region for a program used for rewriting, and thus memory capacity that can store at least two programs is required. Consequently, an inexpensive microcomputer cannot be used, making it difficult to reduce the cost of the ECU.

In view of the above-described problem, an object of the present invention is to provide a communication system and a data rewriting method which can reduce the cost of the ECU.

### Solution to Problem

In order to achieve the above-described object, the present invention provides a communication system including a master ECU configured to function as a master during communication, and a slave ECU configured to function as a slave during communication and to receive communication data from the master ECU, wherein the slave ECU includes a memory region for program in which a program for controlling a load connected to this slave ECU is stored, and a memory region for set value in which a set value used in the program stored in the memory region for program is stored, and wherein the slave ECU is configured to rewrite the set value stored in the memory region for set value based on communication data transmitted from the master ECU.

### Advantageous Effect of the Invention

According to the present invention, the ECU as a slave includes the memory region for the program for controlling the load connected to this slave ECU and the memory region for the set value used in the program stored in the memory region for the program, as described above. Thus, it only has to ensure the memory region for the set value the capacity of which is smaller compared to the conventional region for the rewriting program. Consequently, the memory capacity can be reduced compared to that of the conventional art, thereby allowing to use an inexpensive microcomputer and reducing the cost of the ECU.

### Brief Description of the Drawings

FIG. 1 is a schematic configuration diagram of a communication system according to one embodiment of the present invention;
FIG. 2 is a functional configuration diagram of a master ECU and a slave ECU shown in FIG. 1;
FIG. 3 is an illustrative diagram of a control program in a stored state which is stored in ROM shown in FIG. 2;
FIG. 4 is a data structure diagram of a communication frame used in the communication system shown in FIG. 1; and
FIG. 5 is a flowchart showing operation of the slave ECU shown in FIG. 1.

### Description of Exemplary Embodiments

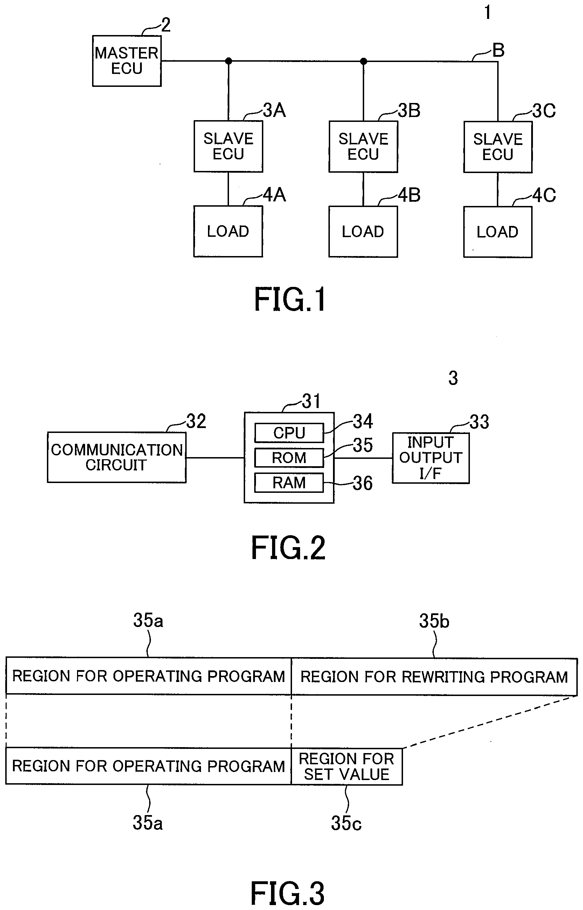

One embodiment of the present invention will be described below with reference to the drawings. FIG. 1 is a schematic configuration diagram of a communication system according to one embodiment of the present invention.

As shown in FIG. 1, a communication system 1 includes a master ECU 2, a slave ECU 3 and a load 4.

The master ECU 2 is connected to the later-described slave ECU 3 via a bus B. The master ECU 2 is an ECU that functions as a master when communicating with other ECU connected to the bus B for a later-described data rewriting. The communication system 1 is a system that can perform communication (multiplex communication) using a communication protocol such as CXPI (Clock Extension Peripheral Interface), for example.

The slave ECU 3 is connected to the master ECU 2 via the bus B. The slave ECU 3 is an ECU that functions as a slave when communicating with the master ECU 2 for the later-described data rewriting. The plurality of slave ECUs 3 can be connected to the bus B. In FIG. 1, three slave ECUs 3A-3C are connected to the bus B.

A load 4 is connected to the slave ECU 3. In FIG. 1, a load 4A is connected to the slave ECU 3A, a load 4B is connected to the slave ECU 3B, and a load 4C is connected to the slave ECU 3C, respectively. The load 4 is a target device and such to be controlled by the slave ECU 3. For example, the load 4A is a motor, the load 4B is a heater and the load 4C is a LED (light emitting diode). A load may also be connected to the master ECU 2.

FIG. 2 shows a functional configuration diagram of the slave ECU 3. The master ECU 2 has the similar configuration. The slave ECU 3 includes a control circuit 31, a communication circuit 32 and an input output interface (I/F) 33.

The control circuit 31 is constituted of a microcomputer including a CPU (Central Processing Unit) 34, ROM (Read Only Memory) 35 and RAM (Random Access Memory) 36. The CPU 34 executes the control program stored in the ROM 35, thereby the control circuit 31 controls the load 4 connected to itself and also manages overall control of the slave ECU 3. Herein, the ROM 35 described in this embodiment is non-volatile rewritable memory such as EEPROM and flash memory.

The communication circuit 32 has function for communicating with other ECU. The input output I/F 33 is a connection I/F for connection with the load 4 and includes a connector and such used for connection with the load 4.

In the following, a stored state, in the ROM 35, of the control program to be executed by the CPU 34 will be explained with reference to FIG. 3. An upper part of FIG. 3 is a conventional stored state of a control program. As shown, the ROM 35 is provided with a region for operating program 35a and a region for rewriting program 35b. The operating program is a control program that is currently being executed by the CPU 34. That is, the region for operating program 35a is a memory region for a program that controls a load connected to itself. The rewriting program is a new program that changes the operating program. As shown in the upper part of FIG. 3, the ROM 35 conventionally requires capacity that can store at least two control programs.

The control program (i.e., program stored in the region for operating program 35a) to be executed by the CPU 34 is not an operation logic itself of the control program, and it is possible to change a set value for a variable and/or a parameter and such used in the control program. It means that, for example, lighting duration of a LED may be changed from 10 seconds to 15 seconds, or lighting color of a LED may be changed from white to blue. Thus, in this embodiment, as shown in a lower part of FIG. 3, the ROM 35 is provided with the region for operating program 35a and a region for set value 35c. That is, the region for set value 35c is a storage region for a set value used in the program. The set value generally has smaller amount of data compared to entire control program, thus the capacity of ROM 35 can be reduced, as shown in FIG. 3.

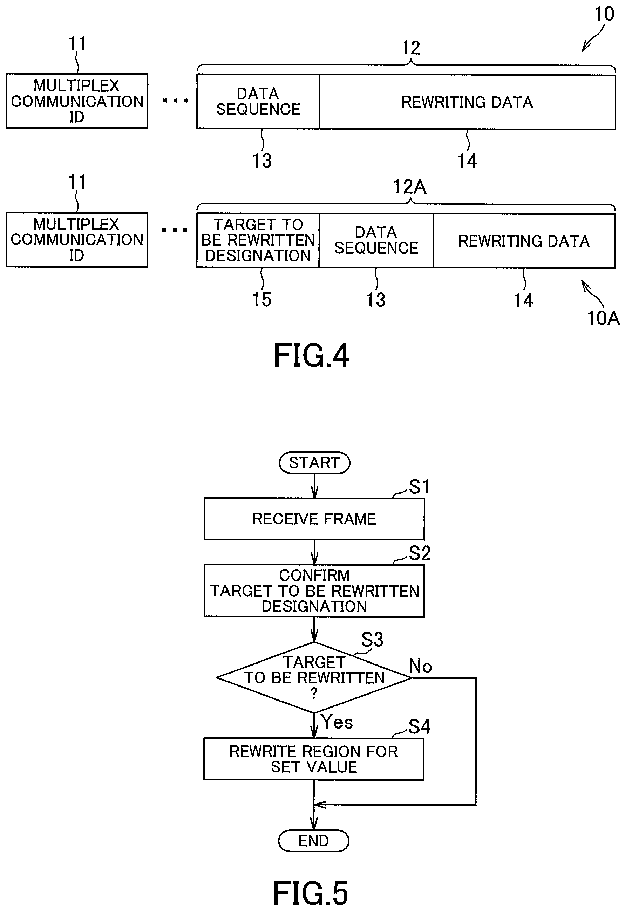

Next, configuration of a communication frame (communication data) 10 that is transmitted when the master ECU 2 rewrites a set value of the slave ECU 3 will be explained with reference to FIG. 4. An upper part of FIG. 4 shows a conventional frame configuration. As shown, the communication frame 10 includes a multiplex communication ID 11, data sequence 13 and rewriting data 14. Herein, the multiplex communication ID 11 constitutes an identification part defined by a communication protocol that is applied in communication between the master ECU 2 and the slave ECU 3. The data sequence 13 and the rewriting data 14 constitute a data part 12.

The multiplex communication ID 11 is information for designating a transmission designation ID. The data sequence 13 is information that, when information included in the later-described rewriting data 14 (e.g., rewriting program) is divided into a plurality of frames, determines the arrangement sequence of these divided frames. The rewriting data 14 is information in which an entire or a part of the rewriting program is contained.

A lower part of FIG. 4 is configuration of a communication frame 10A of this embodiment. In FIG. 4, a multiplex communication ID 11 uses a common ID for the slave ECUs 3A-3C. Rewriting data 14 includes the set value which is described above in connection with the lower part of FIG. 3 (when it is divided into the plurality of frames, it will be a part of the set value) . Data sequence 13 is the same as the conventional data sequence.

Target-to-be-rewritten designating information 15 is added to a data part 12A of the communication frame 10A. The target-to-be-rewritten designating information 15 is information for designating the target ECU to be rewritten. That is, the target-to-be-rewritten designating information 15 is information indicative of a target whose set value is to be rewritten. In this embodiment, the target-to-be-rewritten designating information 15 may be any information which can identify the slave ECU 3A-3C. For example, it may be constituted of an ECU type, a node number and such. The ECU type is, for example, information according to a target to be controlled such as a heater and a motor, or information according to individual functions, or information indicative of type of the slave ECU such as product name. The node number is information indicative of node number when there are several ECUs of the same type. The node number may be set arbitrarily.

In this embodiment, since the data part 12A includes the target-to-be-rewritten designating information 15, the multiplex communication ID 11 can be used in common for the plurality of slave ECUs 3. Consequently, the multiplex communication ID 11 which number is limited upon using the communication protocol can be used efficiently.

Next, operation for rewriting the set value in the slave ECU 3 of the communication system 1 having the above-described configuration will be explained with reference to a flowchart of FIG. 5.

Firstly, the communication frame 10A which has the configuration as described above in connection with the lower part of FIG. 4 and which is transmitted from the master ECU 2 is received at the communication circuit 32 of the slave ECU 3 (step S1). The communication circuit 32 refers to the multiplex communication ID 11; in this embodiment, however, since the same ID is applied to all slave ECUs 3, the communication circuit 32 directly outputs the data part 12A to the control circuit 31.

Next, the CPU 34 of the control circuit 31 confirms the target-to-be-rewritten designating information 15 in the data part 12A outputted from the communication circuit 32 (step S2). Then, the CPU 34 collates the confirmed target-to-be-rewritten designating information 15 with the ECU type or the node number or the like that has been set in advance in the ROM 35, for example. As a result of collation, if they match (YES in step S3), then the region for set value 35c of the ROM 35 is rewritten with the contents of the rewriting data 14 (step S4).

That is, the slave ECU 3 determines whether itself is a target to be rewritten or not based on the information indicative of the target whose set value is to be rewritten, and then, when the slave ECU 3 is determined as the target to be rewritten, the slave ECU 3 rewrites the memory region for set value with the set value contained in the received communication data. Accordingly, step S3 functions as the determination step, and step S4 functions as the rewriting step.

On the other hand, as a result of collating the target-to-be-rewritten designating information 15 with the ECU type or the node number or the like set in this slave ECU 3, if they do not match (NO in step S3), then the ROM 35 is not rewritten, and the flowchart ends.

According to this embodiment, the communication system 1 includes the master ECU 2 and the slave ECUs 3 configured to receive the communication frame from the master ECU 2. The slave ECU 3 includes the region for operating program 35a including the program for controlling the load 4 connected to this slave ECU 3 and the region for set value 35c. Further, the slave ECU 3 rewrites the set value stored in the region for set value 35c based on the communication frame 10A transmitted from the master ECU 2. Such communication system 1 only has to ensure the memory region for set value the capacity of which is smaller compared to that of the conventional region for rewriting program. Consequently, the memory capacity can be reduced compared to that of the conventional art, allowing to use an inexpensive microcomputer and thereby reducing the cost of the ECU.

Further, the communication frame 10A to be transmitted from the master ECU 2 includes the multiplex communication ID 11 defined by the communication protocol applied in the communication between the master ECU 2 and the slave ECUs 3, and the data part 12A including the set value, wherein the data part 12A includes the target-to-be-rewritten designating information 15. The slave ECU 3 determines whether itself is the target to be rewritten or not based on the target-to-be-rewritten designating information 15, and then, when the slave ECU 3 is determined as the target to be rewritten, rewrites the memory region for set value 35c with the set value included in the communication frame 10A. According to such communication frame 10A and the slave ECU 3, it is possible to designate the ECU corresponding to the target to be rewritten regardless of the multiplex communication ID 11.

Further, since the multiplex communication ID 11 to be transmitted from the master ECU is used in common for the plurality of slave ECUs 3, the number of the multiplex communication IDs 11 used can be reduced when there are several ECUs being connected to the bus B. Consequently, the multiplex communication ID 11 which number is limited in the communication protocol can be used efficiently.

The above-described embodiment is described on the assumption that the type of the set value is only one, or that all of the plurality of values is rewritten; however, the ROM 35 may include a plurality of tables including the plurality of set values, and, in addition to the ECU type and the node number and such, the target-to-be-rewritten designating information 15 may also include information designating the table. In this case, instead of rewriting all set values, the set values can be arranged into groups and the rewriting can be performed by the groups, thereby allowing to rewrite the set values by smaller units. That is, the set values are constituted of the plurality of tables, and the target-to-be-rewritten designating information 15 includes information that designates the table.

The present invention is not limited to the embodiment described above. That is, a person skilled in the art can make various modifications within the scope of the invention based on conventionally known knowledge. As long as the modified versions include the configuration of the communication system and the data rewriting method of the present invention, they are within the scope of the present invention.

### List of Reference Signs

1 communication system
2 master ECU
3 slave ECU
4 load
10A communication frame (communication data)
11 multiplex communication ID (identification part defined by communication protocol)
12A data part
14 rewriting data (set value)
15 target-to-be-rewritten designating information (information indicative of target whose set value is to be rewritten)
31 control circuit
34 CPU
35 ROM
35a region for operating program (memory region for program that controls load connected to itself)
35c region for set value (memory region for set value used in program)

## Claims

1. A communication system comprising:
a master ECU configured to function as a master during communication; and
a slave ECU configured to function as a slave during communication and to receive communication data from the master ECU; wherein
the slave ECU includes a memory region for program in which a program for controlling a load connected to this slave ECU is stored, and a memory region for set value in which a set value used in the program stored in the memory region for program is stored, and
the slave ECU is configured to rewrite the set value stored in the memory region for set value based on the communication data transmitted from the master ECU.

2. The communication system according to claim 1, wherein
the communication data to be transmitted from the master ECU includes
an identification part defined by a communication protocol that is applied to communication between the master ECU and the slave ECU, and
a data part including the set value,
the data part includes information indicative of a target whose set value is to be rewritten, and
the slave ECU is configured to determine whether or not this ECU itself is the target to be rewritten based on the information indicative of the target whose set value is to be rewritten, and to rewrite the memory region for set value with the set value included in the received communication data when this slave ECU itself is determined as the target to be rewritten.

3. The communication system according to claim 2, wherein the identification part is a value that is common to a plurality of the slave ECUs.

4. A method for rewriting data of an ECU that is configured to receive communication data including an identification part defined by a communication protocol and a data part, the data part including
a set value used by a program for controlling a load connected the ECU itself, and
information indicative of a target whose set value is to be rewritten,
the method comprising:
determination step of determining whether or not the ECU itself is the target to be rewritten based on the information indicative of the target whose set value is to be rewritten; and
rewriting step of rewriting a current set value with the set value included in the received data part when the ECU itself is determined as the target to be rewritten in the determination step.
